# EUROPÄISCHE PATENTSCHRIFT

(11) **EP 3 513 475 B1**
(45) Veröffentlichungstag und Bekanntmachung des Hinweises auf die Patenterteilung: **24.02.2021**
(21) Anmeldenummer: 16797479.9
(22) Anmeldetag: 07.11.2016
(51) Int. Cl.: H02M 1/12, H02J 3/26, H02J 3/34, H02M 5/458, H02M 1/14, H02J 3/38, H02J 3/36, H02M 7/483

(54) **ANLAGE ZUM ÜBERTRAGEN ELEKTRISCHER LEISTUNG MIT FILTEREINHEIT**
INSTALLATION FOR TRANSMITTING ELECTRICAL POWER COMPRISING A FILTER UNIT
SYSTÈME SERVANT À TRANSMETTRE UNE PUISSANCE ÉLECTRIQUE COMPRENANT UNE UNITÉ DE FILTRAGE

(43) Veröffentlichungstag der Anmeldung: 24.07.2019
(73) Patentinhaber: Siemens Energy Global GmbH & Co. KG, 81739 München (DE)
(72) Erfinder: PIESCHEL, Martin, 90473 Nürnberg (DE); ALVAREZ VALENZUELA, Rodrigo Alonso, 90408 Nürnberg (DE); ANTES, Andreas, 91358 Kunreuth (DE)
(86) Internationale Anmeldenummer: PCT/EP2016/076798
(87) Internationale Veröffentlichungsnummer: WO 2018/082786

(56) Entgegenhaltungen:
- EP-A1- 2 713 494
- WO-A1-91/09451
- WO-A1-2007/028350
- DE-B4- 10 103 031

## Beschreibung

Die Erfindung betrifft eine Anlage zum Übertragen elektrischer Leistung mit einem unidirektionalen Gleichrichter, der wechselspannungsseitig mit einem ersten Wechselspannungsnetz verbindbar ist, einem selbstgeführten Umrichter, der wechselspannungsseitig mit einem zweiten Wechselspannungsnetz verbindbar ist, sowie mit einer Gleichspannungsverbindung, die den Gleichrichter und den Umrichter gleichspannungsseitig miteinander verbindet Die Erfindung betrifft außerdem einen modularen Mehrstufenumrichter.

Eine solche Anlage ist beispielsweise aus der US 8 120 202 B2 bekannt. Bei der bekannten Anlage sind Windkraftanlagen eines Windparks an das erste Wechselspannungsnetz angeschlossen.

Die von den Windkraftanlagen erzeugte elektrische Leistung wird mittels der bekannten Anlage an ein mit der Umrichteranlage verbundenes Versorgungsnetz übertragen.

Mittels des unidirektionalen Gleichrichters ist eine Leistungsübertragung lediglich in eine Richtung möglich. Dies führt insbesondere dazu, dass bei einer Auslegung des selbstgeführten Umrichters der Umstand berücksichtigt werden muss, dass das erste Wechselspannungsnetz unter Umständen nicht symmetrisch ist. Eine Unsymmetrie des ersten Wechselspannungsnetzes kann beispielsweise durch einen Netzfehler oder einen unsymmetrischen Betrieb von Generatoren oder Motoren entstehen. Die Unsymmetrie des ersten Wechselspannungsnetzes kann Spannungsschwankungen im selbstgeführten Umrichter bewirken, die bei dessen Auslegung zu berücksichtigen sind. Eine entsprechende höhere Auslegung des selbstgeführten Umrichters kann nachteilig die Kosten der Anlage erhöhen.

Die EP 2 713 494 A1 offenbart eine Anordnung mit einem Gleichstrom-Filter am Gleichstromkreis. Die Aufgabe des Gleichstromfilters ist es, den Gleichstromkreis gegen elektromagnetische Einflüsse einer angeschlossenen Energieeinspeisevorrichtung zu isolieren, um elektromagnetische Verträglichkeit zu gewährleisten.

Aus der WO 2007/028350 A1 ist eine Anordnung von Umrichtern mit einem Filter zur zusätzlichen Glättung der Gleichspannung bekannt Ein modularer Mehrstufenumrichter ist beispielsweise aus dem Dokument DE 10 103 031 A1 als bekannt zu entnehmen. Eine Filteranordnung zur Filterung und Bedämpfung von Oberschwingungen oder höherfrequenten Schwingungspaketen und zur Verschiebung von Resonanzstellen in elektrischen Netzen ist aus dem Dokument WO 91/09451 A1 bekannt.

Aufgabe der Erfindung ist es, eine eingangs genannte Anlage vorzuschlagen, die möglichst kostengünstig ist.

Diese Aufgabe wird erfindungsgemäß durch die Anlage mit den Merkmalen des Anspruchs 1 gelöst. Vorteilhafte Ausgestaltungen der Erfindung sind Gegenstand der abhängigen Ansprüche.

Die Aufgabe wird bei einer artgemäßen Anlage durch eine gleichspannungsseitig mit dem Umrichter verbundene Filtereinheit gelöst, die einen Strompfad zu einem Neutralpunkt des zweiten Wechselspannungsnetzes ausbildet, wobei der Strompfad eine hohe Impedanz für einen Gleichstrom und eine niedrige Impedanz für einen Wechselstrom mit der Grundschwingungsfrequenz des zweiten Wechselspannungsnetzes aufweist. Der Strompfad der Filtereinheit kann sich dabei beispielsweise zwischen einem Gleichspannungspol des Umrichters bzw. der Gleichspannungsverbindung und dem Neutralpunkt erstrecken. Mittels der Filtereinheit wird also die Gleichspannungsseite des Umrichters an den Neutralpunkt angeschlossen. Mit anderen Worten kann die Filtereinheit zumindest einen Gleichspannungspol des Umrichters mit dem Neutralpunkt verbinden. Aufgrund der hohen Impedanz für Gleichströme findet gleichspannungsseitig des Umrichters kein Spannungsverlust statt. Die hohe Impedanz für Gleichströme lässt sich beispielsweise durch eine Potenzialtrennung realisieren, zweckmäßigerweise mittels einer kapazitiven Potenzialtrennung. Die niedrige Impedanz der Filtereinheit für netzfrequente Wechselströme bedeutet, dass Wechselspannungsanteile einer Spannung auf der Gleichspannungsseite des Umrichters an den Neutralpunkt kurzgeschlossen werden, insbesondere diejenigen mit der Grundschwingungsfrequenz des Wechselspannungsnetzes. Auf diese Weise können die durch eine Unsymmetrie des ersten Wechselspannungsnetzes bewirkten Spannungsschwankungen im Umrichter vorteilhaft verringert oder gar vermieden werden. Dies senkt vorteilhaft die Kosten der gesamten Anlage.

Der Neutralpunkt stellt eine Anbindung an ein festes Potenzial dar. Die Potenzialanbindung kann bezüglich eines der beiden Wechselspannungsnetze erfolgen.

Gemäß der Erfindung ist der Neutralpunkt ein Sternpunkt eines mit dem zweiten Wechselspannungsnetz verbundenen Sternpunkttransformators in Zickzackwicklung, der im Folgenden auch als Erdungstransformator bezeichnet wird. Demnach erstreckt sich der Strompfad der Filtereinheit beispielsweise zwischen einem der Gleichspannungspole des Umrichters bzw. der Gleichspannungsverbindung und dem Sternpunkt des Erdungstransformators. Dies ist besonders vorteilhaft, wenn die Filtereinheit in der räumlichen Nähe des Umrichters angeordnet ist, so dass die Anbindung an das zweite Wechselspannungsnetz nicht aufwändig ist.

Vorteilhafterweise umfasst die Filtereinheit ausschließlich passive Filterkomponenten. Passive Filterkomponenten sind besonders günstig in Montage und Betrieb, insbesondere weil sie keine Regelung erfordern. Eine passive Filterkomponente kann beispielsweise eine Drossel, eine Kapazität in Form eines Kondensators, ein Widerstandselement oder auch eine Kombination dieser oder ähnlicher Komponenten sein.

Gemäß der Erfindung umfasst die Filtereinheit eine Reihenschaltung einer Induktivität und einer Kapazität. Die Filtereinheit bildet somit einen Saugkreis, der die Wechselspannungsanteile bei geeigneter Auslegung herausfiltern kann. Die Induktivität ist beispielsweise eine Filterdrossel, die Kapazität entsprechend ein Filterkondensator.

Erfindungsgemäß sind die Kapazität und die Induktivität derart ausgelegt, dass eine Resonanzfrequenz der Filtereinheit auf die Betriebsfrequenz bzw. Grundschwingungsfrequenz des zweiten Wechselspannungsnetzes abgestimmt ist. Auf diese Weise ist eine besonders niedrige Impedanz für den Wechselstrom mit der Grundschwingungsfrequenz des Wechselspannungsnetzes und damit eine besonders wirksame Filterung bereitgestellt. Bekannterweise gilt in einem solchen Fall beispielsweise für die Induktivität L einer Filterdrossel und die Kapazität C eines Filterkondensators, dass f = 1 / (2 * Pi * (L * C)^(1/2)), wobei f die Resonanzfrequenz der Filtereinheit bezeichnet.

Gemäß einer Ausführungsform der Erfindung umfasst die Filtereinheit einen Stromzweig, der sich zwischen einem positiven Gleichspannungspol des Umrichters und einem negativen Gleichspannungspol des Umrichters erstreckt, wobei der Stromzweig einen ersten Filter mit einer Reihenschaltung einer ersten Induktivität und einer ersten Kapazität sowie einen zweiten Filter mit einer Reihenschaltung mit einer zweiten Induktivität und einer zweiten Kapazität umfasst, wobei ein Potenzialpunkt zwischen dem ersten und dem zweiten Filter mit dem Neutralpunkt verbunden ist. Der Stromzweig kann sich entsprechend auch zwischen einem ersten und einem zweiten Gleichspannungspol der Gleichspannungsleitung erstrecken. Somit umfasst die Filtereinheit zwei Teilfilter. Der erste Teilfilter ist zwischen dem ersten Gleichspannungspol des Umrichters bzw. der Gleichspannungsverbindung und dem Neutralpunkt angeordnet. Der zweite Teilfilter ist zwischen dem Neutralpunkt und dem zweiten Gleichspannungspol des Umrichters bzw. der Gleichspannungsverbindung angeordnet. Auf diese Weise ist eine besonders wirksame Filterung der Wechselspannungsanteile in der Gleichspannung realisiert.

Vorzugsweise ist der unidirektionale Gleichrichter ein Diodengleichrichter. Diodengleichrichter sind besonders einfach und robust in Betrieb. Zugleich sind sie beispielsweise gegenüber selbstgeführten Umrichtern vergleichsweise kompakt und gewichtsarm. Zudem ist der Diodengleichrichter relativ verlustarm im Betrieb. Der Diodengleichrichter kann zum Beispiel als eine Sechspulseine Zwölfpuls oder eine 24-Puls-Brücke realisiert sein.

Gemäß einer Ausführungsform der Erfindung ist der selbstgeführte Umrichter ein modularer Mehrstufenumrichter (MMC). Der modulare Mehrstufenumrichter zeichnet sich durch eine modulare Bauweise aus. Der modulare Mehrstufenumrichter umfasst Phasenzweige, die sich jeweils zwischen einem Wechselspannungsanschluss des Mehrstufenumrichters und einem der beiden Gleichspannungspole erstrecken. Die Phasenzweige des modularen Mehrstufenumrichters weisen jeweils eine Reihenschaltung zweipoliger Schaltmodule auf, wobei jedes Schaltmodul ein- und abschaltbare Leistungshalbleiterschalter sowie einen Energiespeicher, bevorzugt in Form eines Kondensators, umfasst. Ferner ist jedes der Schaltmodule einzeln ansteuerbar. Eine an dem Phasenzweig abfallende Spannung ist gleich der Summe von Spannungen, die an den zugehörigen Schaltmodulen abfallen. Mittels des MMC ist eine besonders vorteilhafte stufenförmige Konverterspannung erzeugbar. Ein MMC ist beispielsweise in der DE 101 03 031 B4 beschrieben. Bevorzugt sind die Schaltmodule als Halbbrückenschaltungen oder als Vollbrückenschaltungen ausgebildet. Gemäß einer Ausführungsvariante der Erfindung weist jedes Schaltmodul eine Vollbrückenschaltung mit vier abschaltbaren Leistungshalbleitern und einem Energiespeicher auf, die so mit dem Energiespeicher verschaltet sind, dass an Ausgangsklemmen des Schaltmoduls eine an dem Energiespeicher abfallende Energiespeicherspannung, eine Nullspannung oder aber die inverse Energiespeicherspannung erzeugbar ist. Gemäß einer weiteren Ausführungsvariante weist jedes Schaltmodul eine Halbbrückenschaltung mit zwei abschaltbaren Leistungshalbleitern und einem Energiespeicher auf, die so mit dem Energiespeicher verschaltet sind, dass an Ausgangsklemmen des Schaltmoduls eine an dem Energiespeicher abfallende Energiespeicherspannung oder eine Nullspannung erzeugbar ist. Ferner ist es ebenfalls denkbar, dass einige der Schaltmodule des MMC Vollbrückenschaltungen und einige weitere Schaltmodule Halbbrückenschaltungen aufweisen.

Die Verwendung eines MMC in der erfindungsgemäßen Anlage ist besonders vorteilhaft. Die Bereitstellung der Filtereinheit ermöglicht eine Verringerung der Anzahl der im MMC verbauten Schaltmodule in jedem Phasenzweig. Dies erlaubt eine vorteilhafte Senkung der Kosten des MMC und der gesamten Anlage, weil die Schaltmodule relativ kostenintensive Bauteile sind. Zudem sind durch die Verringerung der Anzahl der Schaltmodule in jedem Phasenzweig die elektrischen Verluste der Anlage gesenkt, was die Betriebskosten der Anlage weiter senkt.

Die Erfindung betrifft ferner einen modularen Mehrstufenumrichter, der wechselspannungsseitig mit einem Wechselspannungsnetz und gleichspannungsseitig mit einer Gleichspannungsverbindung verbindbar ist.

Die Aufgabe der Erfindung besteht darin, einen solchen modularen Mehrstufenumrichter bereitzustellen, der möglichst kostengünstig ist.

Die Aufgabe wird bei einem artgemäßen modularen Mehrstufenumrichter durch die Merkmale des Anspruchs 6 gelöst.

Die Vorteile des erfindungsgemäßen modularen

Mehrstufenumrichters ergeben sich insbesondere aus den zuvor beschriebenen Vorteilen der erfindungsgemäßen Anlage zum Übertragen elektrischer Leistung.

Alle im Zusammenhang mit der erfindungsgemäßen Anlage beschriebenen Merkmale und Ausführungsvarianten der Filtereinheit bzw. des Umrichters können selbstverständlich auch einzeln oder in Kombination mit dem erfindungsgemäßen modularen Mehrstufenumrichter verwirklicht werden.

Die Erfindung soll im Folgenden anhand der Figuren 1 bis 8 weiter erläutert werden.
Figur 1 zeigt ein Beispiel einer vorliegend nicht beanspruchten Anlage zum Übertragen elektrischer Leistung in einer schematischen Darstellung;
Figur 2 zeigt ein Beispiel eines vorliegend nicht beanspruchten modularen Mehrstufenumrichters in einer schematischen Darstellung;
Figur 3 zeigt ein Ausführungsbeispiel eines erfindungsgemäßen modularen Mehrstufenumrichters in einer schematischen Darstellung;
Figur 4 zeigt ein Beispiel eines Erdungstransformators in einer schematischen Darstellung;
Figur 5 zeigt ein Beispiel eines Phasenzweigs eines modularen Mehrstufenumrichters in einer schematischen Darstellung;
Figur 6 zeigt ein Beispiel einer Filtereinheit in einer schematischen Darstellung;
Figur 7 zeigt ein erstes Beispiel eines Schaltmoduls eines modularen Mehrstufenumrichters in einer schematischen Darstellung;
Figur 8 zeigt ein zweites Beispiel eines Schaltmoduls eines modularen Mehrstufenumrichters in einer schematischen Darstellung.

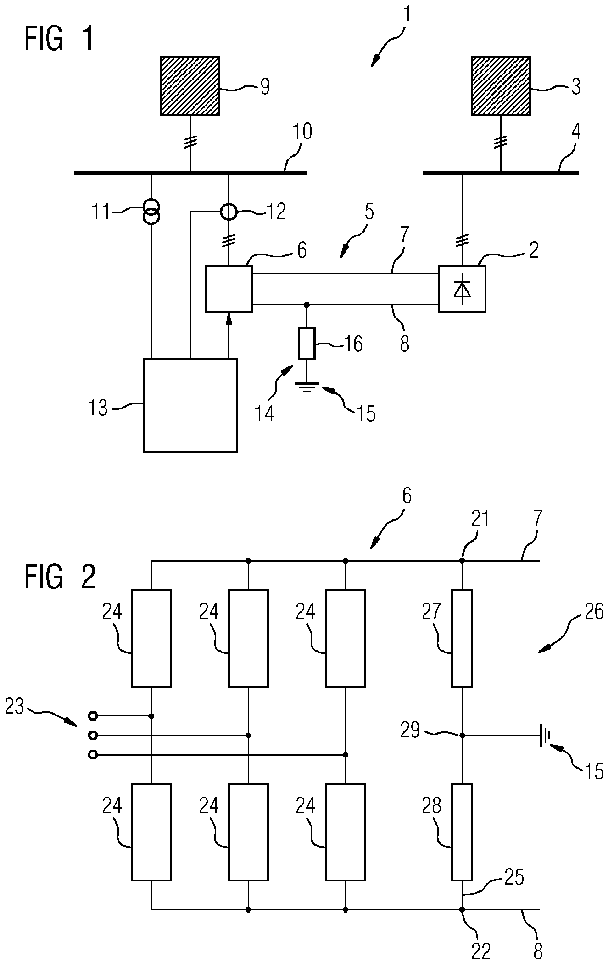

Im Einzelnen ist in Figur 1 eine Anlage 1 zum Übertragen elektrischer Leistung dargestellt. Die Anlage 1 umfasst einen Diodengleichrichter 2. Der Diodengleichrichter 2 ist wechselspannungsseitig über eine Sammelschiene 4 mit einem dreiphasigen ersten Wechselspannungsnetz 3 verbunden. Ferner ist der Diodengleichrichter 2 gleichspannungsseitig über eine Gleichspannungsverbindung 5 mit einem modularen Mehrstufenumrichter (MMC) 6 verbunden. Die Gleichspannungsverbindung 5 umfasst einen ersten Gleichspannungspol 7 und einen zweiten Gleichspannungspol 8. Im dargestellten Beispiel ist der erste Gleichspannungspol 7 ein positiver Gleichspannungspol und der zweite Gleichspannungspol 8 ein negativer Gleichspannungspol.

Der MMC 6 ist gleichspannungsseitig mit der Gleichspannungsverbindung 5 und wechselspannungsseitig über eine Sammelschiene 10 mit einem dreiphasigen zweiten Wechselspannungsnetz 9 verbunden.

Die Anlage 1 umfasst ferner eine Spannungsmesseinheit 11 und eine Strommesseinheit 12 sowie eine Steuereinheit 13 zum Regeln und Ansteuern des MMC 6.

Gleichspannungsseitig des MMC 6 ist eine Filtereinheit 14 vorgesehen, die zum Filtern eines Wechselspannungsanteils in der DC-Leistung eingerichtet ist, die zwischen dem Diodengleichrichter 2 und dem MMC 6 übertragen wird. Die Filtereinheit 14 verbindet den MMC 6 über den zweiten Gleichspannungspol 8 der Gleichspannungsverbindung 5 mit einem Neutralpunkt 15, der im dargestellten Beispiel eine Erdanbindung ist. Die Filtereinheit 14 umfasst einen passiven Filter 16.

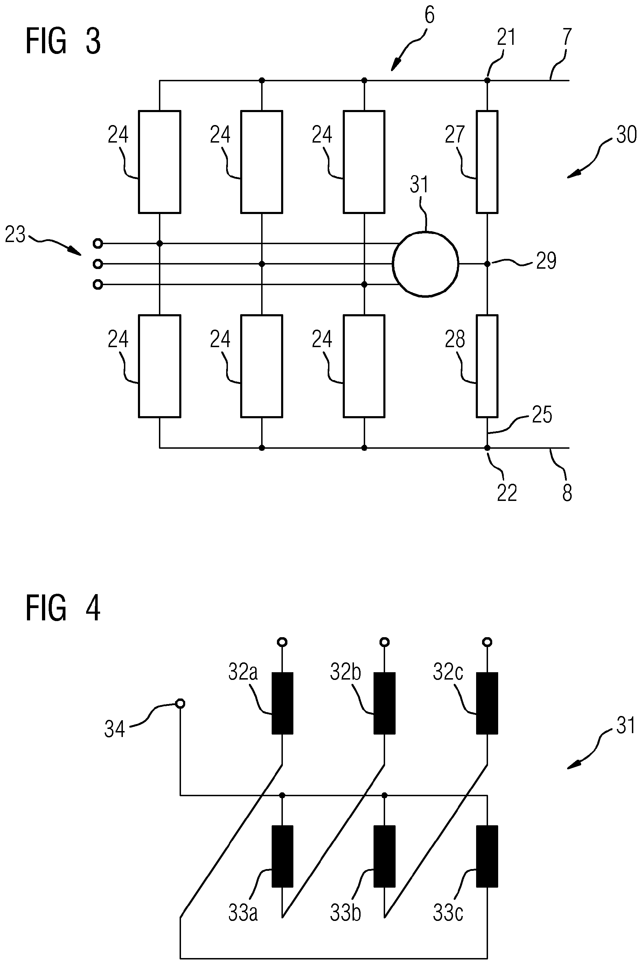

Figur 2 zeigt einen modularen Mehrstufenumrichter (MMC) 6 für die Anlage 1 der Figur 1. Gleiche und gleichartige Elemente wurden dabei in den Figuren 1 und 2 mit gleichen Bezugszeichen versehen. Entsprechendes gilt auch für die nachfolgenden Figuren 3 bis 8.

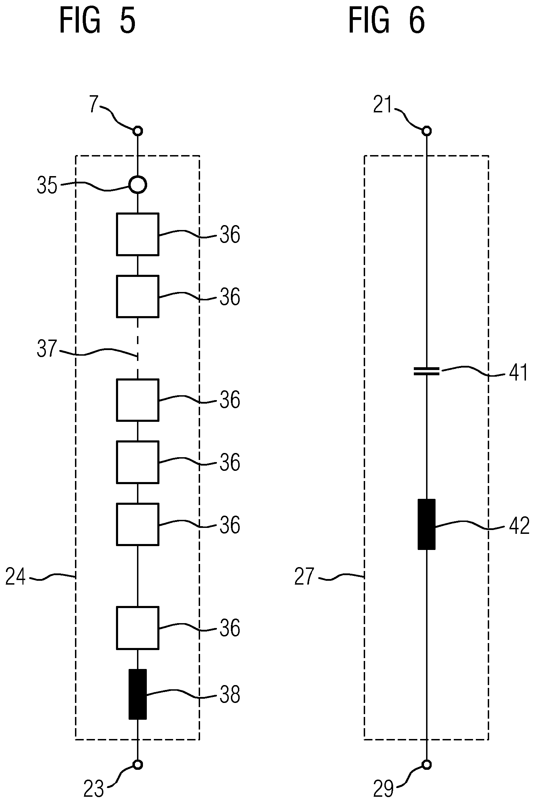

Der MMC 6 weist einen ersten Gleichspannungspol 21 und einen zweiten Gleichspannungspol 22. Der erste Gleichspannungspol 21 ist mit dem ersten Gleichspannungspol 7 der Gleichspannungsverbindung 5 verbunden. Entsprechend ist der zweite Gleichspannungspol 22 mit dem zweiten Gleichspannungspol 8 der Gleichspannungsverbindung 5 verbunden. Der MMC 6 weist ferner einen Wechselspannungsanschluss 23 auf, der zum Anschluss des MMC 6 an das dreiphasige Wechselspannungsnetz 9 eingerichtet ist. Zwischen jedem der beiden Gleichspannungspole 21, 22 und dem Wechselspannungsanschluss 23 erstrecken sich sechs gleichartig aufgebaute Phasenzweige 24. Auf den Aufbau eines Phasenzweiges 24 wird nachfolgend in Figur 5 näher eingegangen.

Zwischen dem ersten und dem zweiten Gleichspannungspol 21 bzw. 22 erstreckt sich ein Stromzweig 25 einer Filtereinheit 26. Die Filtereinheit 26 umfasst einen ersten Filter 27 und einen zweiten Filter 28, die in Reihe zueinander angeordnet sind. Ein Potenzialpunkt 29 zwischen den beiden Filtern 27 bzw. 28 ist mit dem Erdanschluss 15 verbunden, der den Neutralpunkt des Wechselspannungsnetzes 9 darstellt.

Figur 3 zeigt den MMC 6 mit einer Filtereinheit 30. Die Filtereinheit 30 gleicht weitgehend der Filtereinheit 26 der Figur 2 mit dem Unterschied, dass der Potenzialpunkt 29 zwischen den Filtern 27 und 28 der Filtereinheit 30 mit einem Sternpunkt (in Figur 3 figürlich nicht dargestellt) eines Erdungstransformators 31 verbunden ist. Gemäß diesem Ausführungsbeispiel stellt der Sternpunkt des Erdungstransformators 31 den Neutralpunkt des Wechselspannungsnetzes 9 dar.

Der Aufbau des dem Fachmann bekannten Erdungstransformators 31 ist in der nachfolgenden Figur 4 näher dargestellt. Der Erdungstransformator 31 umfasst eine erste, eine zweite und eine dritte Primärwicklung 32a, 32b, 32c, die mit dem Wechselspannungsanschluss 23 des MMC 6 verbunden sind. Die Primärwicklungen 32a-c sind mit Kompensationswicklungen 33a-c in einer Zickzack-Anordnung verbunden. Die Kompensationswicklungen 33a-c sind zu einem Sternpunkt 34 des Erdungstransformators 31 verschaltet. Der Sternpunkt 34 kann mit dem Potenzialpunkt 29 der Filtereinheit galvanisch verbunden werden.

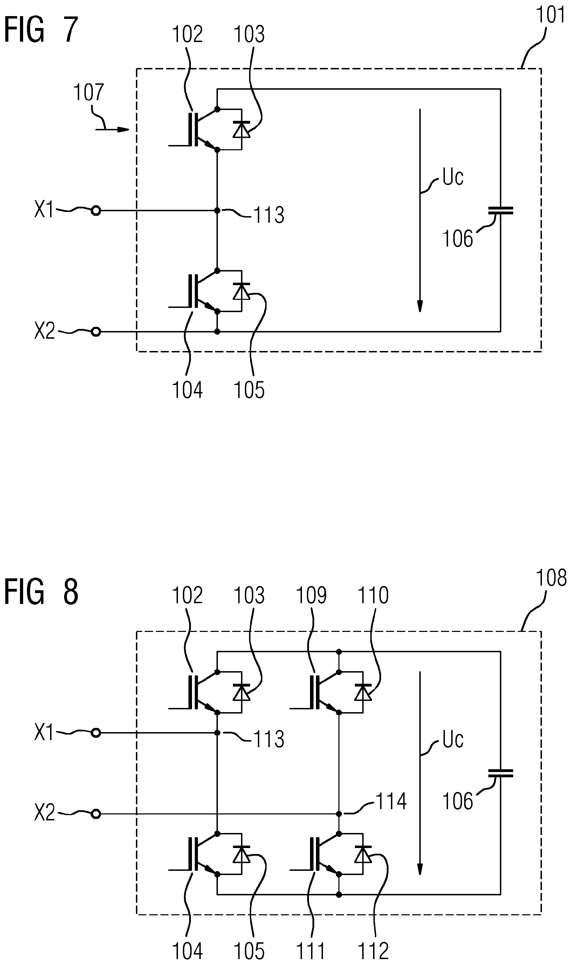

In Figur 5 ist ein Phasenzweig 24 des MMC 6 dargestellt. Der in Figur 5 gezeigte Phasenzweig 24 erstreckt sich zwischen dem ersten Gleichspannungspol 7 und dem Wechselspannungsanschluss 23 des MMC 6. Der Phasenzweig 24 umfasst eine Strommesselement 35 zum Messen eines Zweigstromes Iz sowie eine Reihenschaltung gleichartig aufgebauter zweipoliger Schaltmodule 36. Die Anzahl der Schaltmodule 36 ist grundsätzlich beliebig und auf die jeweilige Anwendung angepasst, was in Figur 5 durch die unterbrochene Linie 37 angedeutet ist. In einer Reihenschaltung zu den Schaltmodulen 36 ist eine Glättungsdrossel 38 angeordnet. Auf den Aufbau der Schaltmodule 36 wird in den nachfolgenden Figuren 7 und 8 näher eingegangen.

Figur 6 zeigt den Aufbau eines Filters 27 der Filtereinheiten 26 und 30. Der Filter 27 kann mit gleichem Aufbau auch als Filter 16 der Filtereinheit 14 der Figur 1 eingesetzt werden. Der Filter 27 umfasst eine Reihenschaltung aus einem Filterkondensator 41 und einer Filterdrossel 42. Die Bemessung und Auslegung der Kapazität C des Filterkondensators 41 und die Induktivität L der Filterdrossel 42 können an die jeweilige Anwendung angepasst sein. Insbesondere sind C und L auf eine Netzfrequenz des mit dem MMC 6 verbundenen Wechselspannungsnetzes derart angepasst, dass diese der Resonanzfrequenz des Filters 27 entspricht. Anstelle einer einzelnen Filterdrossel und eines einzelnen Filterkondensators können auch mehrere in Reihe oder parallel geschaltete Drosseln und/oder Kondensatoren vorgesehen sein.

Der zweite Filter 28 der Filtereinheiten 26 bzw. 30 ist zum Filter 27 gleichartig aufgebaut, wobei die Anordnung des Filterkondensators 41 und der Filterdrossel 42 auch vertauscht sein kann.

In den nachfolgenden Figuren 7 und 8 sind zwei Ausführungsbeispiele der Schaltmodule 36 der Phasenzweige 24 des MMC 6 dargestellt.

Figur 7 zeigt im Einzelnen ein Schaltmodul in Form einer Halbbrückenschaltung 101. Die Halbbrückenschaltung 101 weist zwei Anschlüsse X1 und X2 auf. Der Anschluss X1 kann beispielsweise die Halbbrückenschaltung 101 mit dem Anschluss X2 einer weiteren Halbbrückenschaltung verbinden, so dass eine Reihenschaltung der Submodule gebildet wird.

Die Halbbrückenschaltung 101 umfasst einen ersten Halbleiterschalter 102 in Form eines Bipolartransistors mit isolierter Gate-Elektrode (IGBT), dem eine Freilaufdiode 103 antiparallel geschaltet ist. Ferner umfasst die Halbbrückenschaltung 101 einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Der erste Anschluss X1 ist an einem Potenzialpunkt 113 zwischen den beiden Halbleiterschaltern 102 und 104 angeordnet. Der zweite Anschluss X2 ist mit dem Emitter des zweiten Halbleiterschalters 104 verbunden.

Parallel zu den beiden Halbleiterschaltern 102, 104 ist ein Energiespeicher in Form eines Leistungskondensators 106 angeordnet. Durch eine geeignete Ansteuerung der Halbleiterschalter 102, 104 kann, bei einer durch einen Pfeil 107 angedeuteten Betriebsstromrichtung, der Kondensator 106 zugeschaltet oder überbrückt werden, so dass an den Anschlüssen X1, X2 entweder die am Kondensator 106 abfallende Spannung Uc oder eine Spannung null abfällt.

Ein Beispiel eines Schaltmoduls in Form einer Vollbrückenschaltung 108 ist in Figur 8 schematisch dargestellt. Die Vollbrückenschaltung 108 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenschaltung 108 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Energiespeicher in Form eines Leistungskondensators 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Kondensator 106 abfallenden Spannung Uc, der am Kondensator 106 abfallenden Spannung jedoch mit entgegengesetzter Polarität oder der Spannung null entspricht.

## Patentansprüche

1. Anlage (1) zum Übertragen elektrischer Leistung mit
- einem unidirektionalen Gleichrichter (2), der wechselspannungsseitig mit einem ersten Wechselspannungsnetz (3) verbindbar ist,
- einem selbstgeführten Umrichter (6), der wechselspannungsseitig mit einem zweiten Wechselspannungsnetz (9) verbindbar ist,
- einer Gleichspannungsverbindung (5), die den Gleichrichter (2) und den Umrichter (6) gleichspannungsseitig miteinander verbindet, wobei die Anlage weiterhin eine gleichspannungsseitig mit dem Umrichter (6) verbundene Filtereinheit (30) aufweist, die einen Strompfad zu einem Neutralpunkt (34) ausbildet, wobei der Strompfad eine hohe Impedanz für einen Gleichstrom und eine niedrige Impedanz für einen Wechselstrom mit der Grundschwingungsfrequenz des zweiten Wechselspannungsnetzes (9) aufweist, **dadurch gekennzeichnet, dass** die Filtereinheit (30) eine Reihenschaltung einer Induktivität (42) und einer Kapazität (41) umfasst, wobei die Kapazität (41) und die Induktivität (42) derart ausgelegt sind, dass eine Resonanzfrequenz der Filtereinheit (30) auf eine Betriebsfrequenz des zweiten Wechselspannungsnetzes (9) abgestimmt ist, wobei die Anlage einen Sternpunkttransformator (31) in Zickzackwicklung aufweist, der zum Verbinden mit dem zweiten Wechselspannungsnetz (9) vorgesehen ist, und wobei der Neutralpunkt durch einen Sternpunkt (34) des Sternpunkttransformators (31) gebildet ist.

2. Anlage (1) nach Anspruch 1, wobei die Filtereinheit (30) ausschließlich passive Filterkomponenten (41, 42) umfasst.

3. Anlage (1) nach einem der vorangehenden Ansprüche, wobei die Filtereinheit (30) einen Stromzweig (25) umfasst, der sich zwischen einem positiven Gleichspannungspol (21) des Umrichters (6) und einem negativen Gleichspannungspol (22) des Umrichters (6) erstreckt, wobei der Stromzweig (25) einen ersten Filter (27) mit einer Reihenschaltung einer ersten Induktivität (12) und einer ersten Kapazität (41) sowie einen zweiten Filter (28) mit einer Reihenschaltung mit einer zweiten Induktivität (42) und einer zweiten Kapazität (41) umfasst, wobei ein Potenzialpunkt (29) zwischen dem ersten und dem zweiten Filter (27, 28) mit dem Neutralpunkt (34) verbunden ist.

4. Anlage (1) nach einem der vorangehenden Ansprüche, wobei der unidirektionale Gleichrichter (2) ein Diodengleichrichter ist.

5. Anlage (1) nach einem der vorangehenden Ansprüche, wobei der selbstgeführte Umrichter (6) ein modularer Mehrstufenumrichter ist.

6. Modularer Mehrstufenumrichter (6), der wechselspannungsseitig mit einem Wechselspannungsnetz (9) und gleichspannungsseitig mit einer Gleichspannungsverbindung (15) verbindbar ist,
wobei der Mehrstufenumrichter (6) eine mit einer Gleichspannungsseite des Mehrstufenumrichters (6) verbundene Filtereinheit (30) aufweist, die einen Strompfad zu einem Neutralpunkt (34) ausbildet, wobei der Strompfad eine hohe Impedanz für einen Gleichstrom und eine niedrige Impedanz für einen Wechselstrom mit der Grundschwingungsfrequenz des Wechselspannungsnetzes (9) aufweist, **dadurch gekennzeichnet, dass** die Filtereinheit (30) eine Reihenschaltung einer Induktivität (42) und einer Kapazität (41) umfasst, wobei die Kapazität (41) und die Induktivität (42) derart ausgelegt sind, dass eine Resonanzfrequenz der Filtereinheit (30) auf eine Betriebsfrequenz des zweiten Wechselspannungsnetzes (9) abgestimmt ist, wobei der Mehrstufenumrichter einen Sternpunkttransformator (31) in Zickzackwicklung aufweist, der zum Verbinden mit dem Wechselspannungsnetz (9) vorgesehen ist, und wobei der Neutralpunkt durch einen Sternpunkt (34) des Sternpunkttransformators (31) gebildet ist.

## Claims

1. Installation (1) for transmitting electrical power, having
- a unidirectional rectifier (2) which can be connected to a first AC voltage network (3) on its AC voltage side,
- a self-commutated converter (6) which can be connected to a second AC voltage network (9) on its AC voltage side,
- a DC voltage connection (5) which connects the rectifier (2) and the converter (6) to one another via their respective DC voltage sides,
wherein the installation also has a filter unit (30) which is connected to the converter (6) on its DC voltage side and forms a current path to a neutral point (34), wherein the current path has a high impedance for a direct current and a low impedance for an alternating current at the fundamental frequency of the second AC voltage network (9), **characterized in that** the filter unit (30) comprises a series circuit of an inductance (42) and a capacitance (41), wherein the capacitance (41) and the inductance (42) are designed in such a manner that a resonant frequency of the filter unit (30) is tuned to an operating frequency of the second AC voltage network (9), wherein the installation has a star point transformer (31) in a zigzag winding which is provided for connection to the second AC voltage network (9), and wherein the neutral point is formed by a star point (34) of the star point transformer (31).

2. Installation (1) according to Claim 1,
wherein the filter unit (30) comprises solely passive filter components (41, 42).

3. Installation (1) according to one of the preceding claims, wherein the filter unit (30) comprises a current branch (25) which extends between a positive DC voltage pole (21) of the converter (6) and a negative DC voltage pole (22) of the converter (6), wherein the current branch (25) comprises a first filter (27) with a series circuit of a first inductance (12) and a first capacitance (41) and a second filter (28) with a series circuit having a second inductance (42) and a second capacitance (41), wherein a potential point (29) between the first and second filters (27, 28) is connected to the neutral point (34).

4. Installation (1) according to one of the preceding claims, wherein the unidirectional rectifier (2) is a diode rectifier.

5. Installation (1) according to one of the preceding claims, wherein the self-commutated converter (6) is a modular multi-level converter.

6. Modular multi-level converter (6) which can be connected to an AC voltage network (9) on its AC voltage side and can be connected to a DC voltage connection (15) on its DC voltage side, wherein the multi-level converter (6) has a filter unit (30) which is connected to a DC voltage side of the multi-level converter (6) and forms a current path to a neutral point (34), wherein the current path has a high impedance for a direct current and a low impedance for an alternating current at the fundamental frequency of the AC voltage network (9), **characterized in that** the filter unit (30) comprises a series circuit of an inductance (42) and a capacitance (41), wherein the capacitance (41) and the inductance (42) are designed in such a manner that a resonant frequency of the filter unit (30) is tuned to an operating frequency of the second AC voltage network (9), wherein the multi-level converter has a star point transformer (31) in a zigzag winding which is provided for connection to the AC voltage network (9), and wherein the neutral point is formed by a star point (34) of the star point transformer (31).

## Revendications

1. Installation (1) de transport de puissance électrique, comprenant
- un redresseur (2) unidirectionnel, qui peut être relié du côté de la tension alternative à un premier réseau (3) de tension alternative,
- un onduleur (6) à commutation autonome, qui, du côté de la tension alternative, peut être relié à un deuxième réseau (9) de tension alternative,
- une liaison (5) de tension continue, qui relie entre eux, du côté de la tension continue, le redresseur (2) et l'onduleur (6),
dans lequel l'installation a, en outre, une unité (30) de filtrage, qui est reliée, du côté de la tension continue, à l'onduleur (6) et qui constitue un trajet de courant vers un point (34) neutre, le trajet de courant ayant une grande impédance pour un courant continu et une petite impédance pour un courant alternatif, ayant la fréquence d'oscillation fondamentale du deuxième réseau (9) de tension alternative, **caractérisée en ce que** l'unité (30) de filtrage comprend un circuit série d'une inductance (42) et d'une capacité (41), la capacité (41) et l'inductance (42) étant conçues pour accorder une fréquence de résonnance de l'unité (30) de filtrage à une fréquence de fonctionnement du deuxième réseau (9) de tension alternative, l'installation ayant un transformateur ( 31 ) à point étoile, en enroulement zigzag, qui est prévu pour la liaison avec le deuxième réseau (9) de tension alternative et le point neutre étant formé par un point ( 34 ) étoile du transformateur ( 31 ) à point étoile.

2. Installation ( 1 ) suivant la revendication 1,
dans laquelle l'unité ( 30 ) de filtrage comprend exclusivement des composants ( 41, 42 ) de filtrage passifs.

3. Installation (1 ) suivant l'une des revendications précédentes,
dans laquelle l'unité ( 30 ) de filtrage comprend une branche ( 25 ) de courant, qui s'étend entre un pôle ( 21 ) positif de tension continue de l'onduleur ( 6 ) et un pôle ( 22 ) négatif de tension continue de l'onduleur ( 6 ), la branche ( 25 ) de courant comprenant un premier filtre ( 27 ) ayant un circuit série d'une première inductance ( 12 ) et d'une première capacité ( 41 ), ainsi qu'un deuxième filtre ( 28 ) ayant un circuit série d'une deuxième inductance ( 42 ) et d'une deuxième capacité ( 41 ), un point ( 29 ) de potentiel, entre le premier et le deuxième filtres ( 27, 28 ) étant relié au point ( 34 ) neutre.

4. Installation ( 1 ) suivant l'une des revendications précédentes,
dans lequel le redresseur ( 2 ) unidirectionnel est un redresseur à diode.

5. Installation ( 1 ) suivant l'une des revendications précédentes,
dans lequel l'onduleur ( 6 ) à commutation autonome est un onduleur modulaire à plusieurs étages.

6. Onduleur (6) modulaire à plusieurs étages, qui peut être relié, du côté de la tension alternative, à un réseau (9) de tension alternative, et du côté de la tension continue, à une liaison (15) de tension continue,
l'onduleur (6) à plusieurs étages ayant une unité (30) de filtrage, qui est reliée à un côté de la tension continue de l'onduleur (6) à plusieurs étages et qui constitue un trajet de courant vers un point (34) neutre, le trajet de courant ayant une grande impédance pour un courant continu et une petite impédance pour un courant alternatif ayant la fréquence d'oscillations fondamentale du réseau (9) de tension alternative, **caractérisé en ce que** l'unité (30) de filtrage comprend un circuit série d'une inductance (42) et d'une capacité (41), la capacité (41) et l'inductance (42) étant conçues pour accorder une fréquence de résonnance de l'unité (30) de filtrage à une fréquence de fonctionnement du deuxième réseau (9) de tension alternative, l'onduleur à plusieurs étages ayant un transformateur (31) à point étoile en enroulement en zigzag, qui est prévu pour la liaison avec le réseau (9) de tension alternative, et le point neutre étant formé par un point (34) étoile d'un transformateur (31) à point étoile.
